# EUROPÄISCHE PATENTSCHRIFT

(11) **EP 1 091 646 B1**
(45) Veröffentlichungstag und Bekanntmachung des Hinweises auf die Patenterteilung: **06.05.2004**
(21) Anmeldenummer: 99931172.3
(22) Anmeldetag: 24.06.1999
(51) Int. Cl.: A01N 1/02, A61J 1/00

(54) **BEHÄLTER MIT KRYOKONSERVIERTEM BIOLOGISCHEM MATERIAL UND VERFAHREN ZU DESSEN AUFTAUEN**
CONTAINER WITH CRYOPRESERVED BIOLOGICAL MATERIAL AND METHOD OF THAWING THIS MATERIAL
RECIPIENT RENFERMANT UN MATERIAU BIOLOGIQUE CRYOCONSERVE ET PROCEDE PERMETTANT DE DECONGELER LEDIT MATERIAU

(30) Priorität: 26.06.1998 DE 19828671
(43) Veröffentlichungstag der Anmeldung: 18.04.2001
(73) Patentinhaber: Universitätsklinikum Freiburg, 79106 Freiburg (DE)
(72) Erfinder: KOPP, Jürgen, D-79102 Freiburg (DE); STARK, G., Björn, D-79874 Breitnau (DE)
(74) Vertreter: Keller, Günter, Dr.
(86) Internationale Anmeldenummer: PCT/EP1999/004401
(87) Internationale Veröffentlichungsnummer: WO 2000/000021

(56) Entgegenhaltungen:
- WO-A-91/18575
- WO-A-94/13135
- WO-A-96/21351
- US-A- 4 630 448
- US-A- 5 879 876

## Beschreibung

Die Erfindung betrifft einen Behälter für kryokonserviertes biologisches Material, insbesondere in einem Medium-Kältekonservierungsmittel-Gemisch kryokonservierte Transplantate, sowie ein Verfahren zum Auftauen von kryokonserviertem biologischem Material.

In der Humanmedizin werden zur Beseitigung von Defekten, z.B. denen der Haut bei Verbrennungen, Transplantate aus lebendem Gewebe eingesetzt. Man unterscheidet nach Herkunft des Gewebes zwischen einer autologen Transplantation, bei der Spender und Empfänger identisch sind und das Gewebe von einer Körperregion auf eine andere übertragen wird, und einer allogenen Transplantation, bei der Spender und Empfänger verschieden sind. Die autologe Transplantation findet insbesondere bei der chirurgischen Versorgung von schweren Gewebeschädigungen nach Verbrennungen sowie zum Verschluß chronischer Wunden Anwendung.

In den letzten Jahren wurde eine Anzahl verschiedener Techniken zum Wundverschluß entwickelt, die bei der Behandlung ausgedehnter Gewebeschädigungen eingesetzt werden. Zu diesen Techniken gehören die Transplantation *in vitro* kultivierter autologer Hautzelltransplantate sowie die Transplantation sogenannter "zusammengesetzter Transplantate" (composite grafts), die aus bioverträglichen Trägermaterialien bestehen, die mit darauf *in vitro* kultivierten adhärenten Zellen bewachsen sind. Durch eine stabile Adhärenz sichert das Trägermaterial das Verbleiben der Zellen in der Wunde und fördert zusätzlich den Wundverschluß. Die Zellen repräsentieren den im geschädigten Empfängergewebe vorherrschenden Zelltyp und ersetzen nach ihrer Transplantation im Empfängerbett dort fehlende Zellen.

Autologe, *in vitro* kultivierte Hautzelltransplantate sowie zusammengesetzte Transplantate haben gegenüber dem Patienten entnommenen Gewebetransplantaten den Vorteil, daß sie in beliebig großen Mengen produziert werden können. Dies ist bei der chirurgischen Behandlung von Patienten mit ausgedehnten tiefgradigen Verbrennungen von großem Vorteil, weil die Anwendung von Standardmethoden, wie der autologen Spalthautabdeckung, durch die Limitierung der Spalthautentnahmeareale stark beschränkt ist.

Für das Anwachsen und die Funktion eines autologen Transplantats ist neben einer optimalen Operationstechnik die Vitalität des Transplantats entscheidend. Aus diesem Grund wurden *in vitro*-kultivierte Transplantate und Biokonstrukte bislang nur frisch, also direkt nach abgeschlossener *in vitro*-Konstruktion *in vivo* angewendet. Dies hat jedoch den Nachteil, daß eine Vorratshaltung der Transplantate nicht möglich ist, und daher der Operationszeitpunkt immer sorgfältig mit dem Kultivierungszyklus synchronisiert werden muß.

Allogene Hautzell-Transplantate sind ebenfalls im klinischen Einsatz und haben sich als vorteilhaft erwiesen. Zwar werden die Zellen nach einiger Zeit vom Immunsystem des Empfängers abgestoßen, bis es aber dazu kommt, produzieren die transplantierten Zellen im Gewebedefekt Wachstumsfaktoren. Diese sogenannten Zytokine stimulieren dort lokalisierte Zellen und führen damit zu einer Beschleunigung von Wundheilungsprozessen. Besonders bei Patienten mit chronischen Wunden konnte diese Methode mit Erfolg eingesetzt werden.

Die Entwicklung eines zuverlässigen Kryokonservierungsverfahren für *in vitro*-kultivierte Hautzelltransplantate und Biokonstrukte würde jedoch erlauben, Transplantate beliebig lange für den Patienten aufzubewahren, um bei einem Mißlingen einer primären Transplantation jederzeit auf kryokonservierte Transplantate zurückgreifen zu können. Es wäre ebenfalls möglich, Transplantate in großem Umfang zu produzieren und sie tiefgefroren über lange Zeiträume zu lagern.

Aus dem Stand der Technik sind kryokonservierte Biokonstrukte bekannt. In ihrer Arbeit "Reduced engraftment and wound closure of cryopreserved cultured skin substitutes grafted to athymic mice" (Cryobiology 35:132-142(1997)) beschreiben Harringer et al. den experimentellen Vergleich von kryokonservierten und frischen Biokonstrukten, die aus Keratinozyten kultiviert auf einer Glykosamino-Glykan-Matrix bestehen. Nach Transplantation auf standardisierte Wunden an einem athymischen Mausmodell zeigte sich jedoch, daß kryokonservierte Transplantate wesentlich schlechter einheilten als frische. Ursächlich ist nach Meinung der Autoren die bis dato mangelhafte Kryokonservierungs- und Auftautechnik.

Das US-Patent Nr. 4,630,448 beschreibt einen sterilen Beutel aus Polyethylenvinylacetat, der zur Aufbewahrung und zum Einfrieren von Gewebe wie Haut, Knorpel und Dura geeignet ist.

WO 91/18575 A1 offenbart einen Transportcontainer für sogenannte "Sheet"-Transplantate.

WO96/21351 A2 beschreibt die Tiefkühllagerung von suspendierten Inselzelltransplantaten. Oberhauttransplantate werden nicht offenbart.

Gegenstand von WO 94/13135 A1 sind kryoprotektive wäßrige Lösungen für sogenannte "Sheet"-Transplantate.

Eine Herstellungs- und Tiefkühllagerungstechnik für Biokonstrukte, die aus einem bioverträglichen Trägermaterial mit darauf kultivierten Keratinozyten bestehen, wurde von Kopp beschrieben (Dissertation, Freiburg, 1997). Die Kryokonservierung und der darauffolgende Auftauvorgang nach Langzeitlagerung konnten hier ohne nennenswerten Zellverlust durchgeführt werden. Nach Transplantation der Biokonstrukte auf standardisierte Wunden in einem Tiermodell heilten die aufgetauten Zellen ein und bildeten eine Neohaut, deren Qualität vergleichbar war mit derjenigen, die bei Transplantation von frischen zusammengesetzten Transplantaten zu beobachten war.

Nachteil dieser Kryokonservierungsmethode ist jedoch, daß das zum Erhalten vitaler Transplantate notwendige, zellschonende Auftauverfahren geräte- und labortechnisch (sterile Arbeitsbank, spezielle apparative Bedingungen, wie z.B. Pippetierhilfen, Eismaschinen) sehr aufwendig und somit den Spezialisten vorbehalten ist. Daher ist dieses Verfahren für die Bereitstellung von gebrauchsfertigen Transplantaten in großem Umfang zur klinischen Anwendung nicht geeignet.

Es ist deshalb eine Aufgabe der Erfindung, ein kryokonserviertes, in vitro hergestelltes, zusammengesetztes Oberhauttransplantat in einer solchen Form zur Verfügung zu stellen, daß das Transplantat auch von nicht hoch spezialisierten Kliniken oder Ärzten ohne große Schwierigkeiten eingesetzt werden kann.
Gegenstand der vorliegenden Erfindung ist daher ein Behälter mit einem kryokonservierten Oberhauttransplantat, dadurch gekennzeichnet, daß das Oberhauttransplantat ein biologisch verträgliches Trägermaterial und darauf angewachsene humane Zellen, wobei die menschlichen Zellen durch in vitro Kultivierung vermehrt wurden, umfaßt und der Behälter aus einem flexiblen, nicht zelltoxischen Kunststoffmaterial hergestellt ist und eine verschließbare Öffnung aufweist.
Das in dem Behälter befindliche kultivierte Oberhauttransplantat umfaßt ein biologisch verträgliches Trägermaterial und darauf angewachsene humane Zellen.

Bei dem biologisch verträglichen Trägermaterial kann es sich um Materialien handeln wie Silikon, Silikon-Nylon, Polyurethan, oder auch biologisch resorbierbare Materialien, wie Collagene, Hyaluronsäurederivate, Alginate oder Calciumphosphatstrukturen.

Bevorzugt sind die humanen Zellen ausgewählt aus Keratinozyten, Fibroblasten, Melanozyten, Endothelzellen, Nervenzellen, Muskelzellen und Mesothelzellen.

Die menschlichen Zellen werden durch in vitro Kultivierung vermehrt. Es kann sich hierbei um autologe Zellen oder auch um allogene Zellen handeln, wobei bei letztgenannten Zellen eine industrielle Herstellung der Behälter erleichtert ist.

Bevorzugterweise können auch die Zellen mit einem fremden Gen, beispielsweise einem Gen kodierend für ein Zytokin, das das Wachstum von Hautzellen fördert, wie Keratinozytenwachstumsfaktor, transfiziert werden.

In besonders bevorzugter Ausführungsform umfaßt ein erfindungsgemäßer Behälter
- einen Beutel (2) aus flexiblem, nicht zelltoxischem Kunststoffmaterial, welcher aus zwei im wesentlichen gleichen Kunststoffbahnen (5,6) besteht, die unter Auslassung einer verschließbaren Öffnung (8) zum Einführen des kryokonservierten biologischen Materials längs ihrer Ränder (7) miteinander verbunden sind,
- ein Schlauchstück (3), das den Innenraum des Kunststoffbeutels (2) mit der Umgebung verbindet, und
- eine Absperrvorrichtung (4), die zwischen dem Kunststoffbeutel (2) und einem Anschluß (10) für ein Infusionssystem angeordnet ist.

Bevorzugt erstreckt sich die Öffnung (8) zum Einführen des kryokonservierten biologischen Materials über die dem Schlauchstück (3) gegenüberliegende Seite des Kunststoffbeutels (2) und ist lösbar verschließbar. Das Schlauchstück (3) kann an einer beliebigen Stelle der Seite (7) angeordnet sein.

Bevorzugt weist der Behälter einen Aufreißmechanismus zum Aufreißen des Kunststoffbeutels (2) auf.

Dieser Aufreißmechanismus kann wenigstens eine aufreißbare Randverbindungsnaht (7.1) beinhalten, die sich an ein seitliches Ende der Öffnung (8) anschließt. Alternativ hierzu kann der Aufreißmechanismus auch einen die Beutelwand aufreißenden Aufreißfaden oder -band beinhalten.

Das Kunststoffmaterial aus dem der erfindungsgemäße Behälter hergestellt ist, ist bevorzugt lichtundurchlässig. Hierbei kann es sich um PVC-Folien handeln, die allerdings keinesfalls zelltoxisch sein dürfen.

Üblicherweise sind die den Beutel (2) bildenden Kunststoffbahnen (5,6) im wesentlichen rechteckig.

Bevorzugt ist der Anschluß (10) für ein Infusionssystem als Luer-Lock-Verbindung ausgestaltet, wobei die Absperrvorrichtung (4) über einen Luer-Lock-Adapter (9) an das Schlauchstück (3) angeschlossen sein kann. Die Absperrvorrichtung (4) ist bevorzugt als Zweiwegehahn ausgebildet.

Üblicherweise wird darauf geachtet, daß das sich in einem Medium-Kältekonservierungsmittel-Gemisch befindliche Oberhauttransplantat in dem Behälter luftdicht verschlossen ist, wobei sich in dem Behälter keine wesentlichen Luftmengen befinden, da die Luft vor dem Gefriervorgang atmosphärisch, aber ohne Erzeugung eines wesentlichen Unterdruckes aus dem Behälter entfernt wurde.

Bei der Verwendung des erfindungsgemäßen Behälters wird bevorzugt ein Verfahren zum Auftauen eines kryokonservierten Oberhauttransplantats angewendet bei dem zunächst in den Behälter angewärmtes transplantatspezifisches Medium eingeführt wird, wodurch der Auftauvorgang mit einer kontinuierlichen Verdünnung des Kryokonservierungsmittels beginnt und anschließend wird die Verpackung unter sterilen Bedingungen geöffnet. Bevorzugt wird dabei das Medium mit einer vorbestimmten Flußrate zugeführt. Vor der Verwendung, also der Aufbringung des Transplantats auf die Wunde wird das Oberhauttransplantat in einer geeigneten Waschlösung gespült.

Der erfindungsgemäße Kunststoffbehälter ist besonders vorteilhaft, wenn große Mengen an kryokonservierten Transplantaten verpackt und gelagert werden sollen. Zum Verpacken des kryokonservierten biologischen Materials in den erfindungsgemäßen Kunststoffbehälter wird das Material unter sterilen Bedingungen durch die dafür vorgesehene Öffnung des Behälters eingeführt. Der Behälter mit dem kryokonservierten biologischen Material wird anschließend atmosphärisch (ohne Erzeugung eines Unterdruckes) evakuiert und luftdicht verschlossen, beispielsweise durch Verschweißen der Ränder der Kunststoffbahnen entlang der Öffnung. Der Behälter mit kryokonserviertem biologischem Material wird dann bei Temperaturen unter dem Gefrierpunkt des biologischen Materials problemlos gelagert, bis das Material vom Anwender aufgetaut und verwendet wird. Das im Behälter verpackte Material kann auch tiefgekühlt transportiert und an einem anderen Ort eingesetzt werden. Bei Anwendung des erfindungsgemäßen Behälters können die soeben erläuterten Verfahrensschritte leicht standardisiert und von einem einzigen Labor für eine Vielzahl von Anwendern durchgeführt werden.

Schließlich erlaubt der erfindungsgemäße Behälter eine einfache Durchführung des Auftauvorgangs im Behälter selbst. Darüber hinaus wird die Gefahr einer mikrobiellen Kontamination des Materials dadurch reduziert, daß der Behälter vor seinem Einsatz sterilisiert und nach Einführen des Materials luftdicht verschlossen wird. Auch während des Auftauvorgangs erlaubt es die direkte Zuleitung des sterilen Mediums über das Schlauchstück in das Innere des Behälters, das biologische Material keimfrei zu halten.

Vorteil des erfindungsgemäßen Verfahrens ist, daß der Auftauvorgang mit Hilfe des vorgewärmten Mediums zellschonend durchgeführt werden kann, da sich die Temperatur im Beutel langsam und kontinuierlich erhöht. Gleichzeitig wird durch Verdünnung des Kältekonservierungsmittels (in der Regel DMSO) der zelltoxische Effekt vermieden, der zu einer verminderten Viabilität der Transplantate führen kann und in der Regel den limitierenden Faktor des Auftauvorganges darstellt.

Vorzugsweise wird die Flußrate des aufgewärmten Mediums mittels eines zwischen Infusionssystem und Absperrvorrichtung eingebauten Tropfenzählers geregelt, es sind aber auch andere Regelungsmöglichkeiten denkbar.

Eine bevorzugte Ausführungsform des Kunststoffbehälters (ohne biologischem Material) gemäß der Erfindung wird nun anhand der Zeichnung näher erläutert.

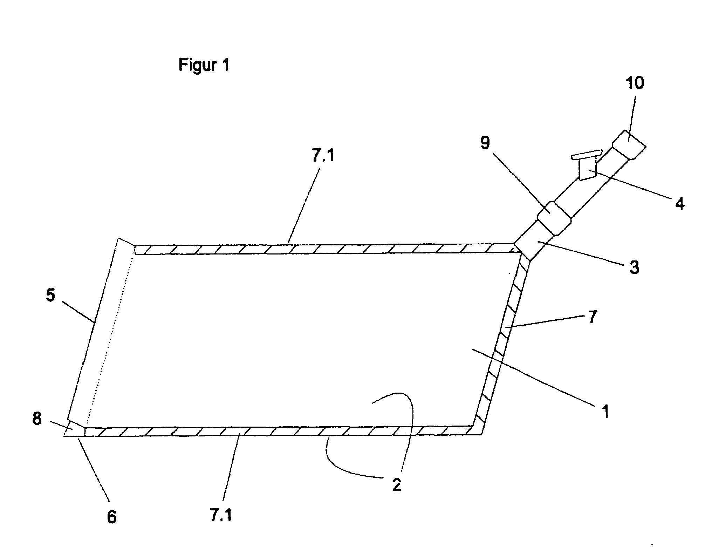

Fig. 1 zeigt eine bevorzugte Ausführungsform des erfindungsgemäßen Kunststoffbeutels für kryokonserviertes biologisches Material in Draufsicht.

Der Kunststoffbehälter 1 umfaßt einen Beutel 2 aus flexiblem, lichtundurchlässigem, nicht zelltoxischem Kunststoffmaterial, ein Schlauchstück 2 und eine Absperrvorrichtung 4. Der Kunststoffbeutel 2 besteht aus zwei übereinander angeordneten, rechteckigen und im wesentlichen gleichen Kunststoffbahnen 5,6, deren Ränder 7 an drei der vier Seiten des Beutels 2 über eine Breite von etwa in 0,5 cm Breite miteinander verschweißt sind. Zwei der Seiten (7.1) sind so miteinander verschweißt, daß der Behälter durch entgegengerichtetes Ziehen der beiden Laschen an der Öffnung 8 leicht aufgerissen werden kann. Da die vierte Seite unverschweißt bleibt, entsteht zwischen den beiden Bahnen eine Öffnung 8, die zum Einführen des biologischen Materials in den Beutel 2 dient.

An der der Öffnung 8 gegenüberliegenden Seite des Kunststoffbeutels 2 ist an einer der beiden Ecken das Schlauchstück 3 zwischen den beiden Kunststoffbahnen 5,6 angeordnet. Das Schlauchstück 3 ist mit den Kunststoffbahnen 5,6 und der Schweißnaht, die beide Bahnen verbindet, luft- und flüssigkeitsdicht verbunden und an seinem freien Ende über einen standardisierten Luer-Lock-Adapter 9 an die Absperrvorrichtung 4 angeschlossen.

Die Absperrvorrichtung 4, die in der bevorzugten Ausführungsform des erfindungsgemäßen Kunststoffbehälters als Zweiwegehahn ausgebildet ist, weist an ihrem distalen Ende einen Anschluß 10 für ein Infusionssystem (nicht gezeigt) auf. Dieser Anschluß 10 ist bevorzugt als standardisierte Luer-Lock-Verbindung ausgebildet.

### Beispiel 1

Von einem Spender wurde ein Stück Haut mittels Biopsie entnommen und zuerst mechanisch und anschließen enzymatisch zerkleinert. Hieraus wurden die Keratinozyten in vitro kultiviert. 1,15 x 10⁶ Keratinozyten wurden nach Resuspension in 2 ml serumfreiem Medium vorsichtig mit einer Pipette auf die Trägermembran in regelmäßigen Abständen als "dicke Tropfen aufgetragen und danach für zwei Stunden bei 37°C und 5% CO₂ im Brutschrank inkubiert. Diese Vorgehensweise wurde gewählt, um den Zellen die Möglichkeit zur Ausbildung einer Anhaftung an die Membran-Oberfläche zu geben und somit ein Abschwimmen der Keratinozyten im normalen Medium-Überschuß von den Folien zu verhindern. Nach dieser ersten Inkubationsperiode wurden die Kulturflaschen so weit gefüllt, daß die Träger mit den Zellen mit Medium bedeckt waren. Kontinuierlich wurde die Anzahl der nicht an den Träger gebundenen Zellen bestimmt und sobald erforderlich, in der Regel alle zwei Tage, wurde das Nährmedium durch frisches ersetzt.

### Beispiel 2

Zur Kryokonservierung wurden solche Membranen ausgewählt, auf denen die Keratinozyten bei einer Subkonfluenz von 50-60% adhärent anhafteten. Alle Arbeitsschritte wurden nur mit Medien und Materialien durchgeführt, die auf eine Temperatur von +4°C gekühlt waren, um die Zellen möglichst vor toxischen Nebeneffekten von erwärmtem DMSO (Dimethylsulfoxid) zu schützen.

Zunächst wurden die zu kryokonservierenden Biokonstrukte in den Kulturflaschen im Kühlschrank bei +4°C für eine Stunde vorgekühlt. Danach wurden die Flaschen für eine weitere halbe Stunde in einem Laminar-Air-Flow auf Eis heruntergekühlt und anschließend wurde das Medium abgesaugt, wobei die Kulturflaschen während des gesamten Vorgangs im Eisbad verblieben. Daraufhin wurde dem Kulturbehälter frisches, serumfreies Medium zugesetzt, das mit 10% DMSO versetzt wurde. Die so behandelten Kulturflaschen wurden bei -85°C kryokonserviert. Vorteil dieses Schrittes ist, daß sich die Biokonstrukte im kryokonservierten Zustand in einer ebenen Anordnung befinden.

### Beispiel 3

Nach einem Tag bei -85°C wurden die tiefgefrorenen Konstrukte, die nun als längliche feste Blöcke vorlagen, unter sterilen Bedingungen nach Entfernung der Flaschenoberseite aus den Flaschen entnommen und in vorbereitete, erfindungsgemäße, sterile Behälter verbracht. Die Behälter wurden anschließen atmosphärisch, d.h. ohne Schaffung eines wesentlichen Unterdruckes evakuiert und luftdicht verschlossen. Bei diesem Vorgang wurde darauf geachtet, daß das kryokonservierte Konstrukt nicht antaute. Dies wurde dadurch bewerkstelligt, daß zügig gearbeitet wurde und der Arbeitsbereich entsprechend gekühlt war. Selbstverständlich können die Transplantate auch direkt in einen erfindungsgemäßen Behälter eingebracht werden. Da es sich hierbei jedoch um flexible Strukturen handelt, sollte tunlichst darauf geachtet werden, die Behälter so einzufrieren, daß eine ebene Struktur gewährleistet ist und, daß die Struktur nicht mechanisch zerstört wird.

### Beispiel 4

Ein gemäß Beispiel 3 hergestellter erfindungsgemäßer Behälter wurde zunächst bei -85°C gelagert. Für die Verwendung wurde der erfindungsgemäße Behälter zunächst aus dem Tiefkühlschrank geholt. Der an dem Behälter angebrachte Schlauch mit Luer-Lock-Adapter wurde an ein Infusionssystem, das eine Infusionsflasche mit etwa 200 ml Medium und einen Tropfenzähler umfaßte, angeschlossen. Das Nährmedium wurde zuvor auf etwa 37°C erwärmt. Dann wurde der Drei-Wege-Hahn geöffnet und der Auftauvorgang begann mit einer kontinuierlichen Verdünnung des im Medium enthaltenen Kryokonservierungsmittels DMSO. Da die Verpackung ohne Unterdruck evakuiert wurde, ist eine gleichmäßige Auffüllung garantiert. Der Auftauvorgang war nach etwa 15 Minuten abgeschlossen. Danach erfolgt das vorsichtige Öffnen der Verpackung an den dafür vorgesehenen Laschen und das Konstrukt konnte unter sterilen Bedingungen aus dem erfindungsgemäßen Behälter mit zwei Pinzetten entnommen werden und in eine vorbereitete Schale mit der erwärmten Waschlösung überführt werden. Zum Waschen eignete sich besonders Ringerlösung. Anschließend konnte das aufgetaute Transplantat direkt auf die Wunde aufgebracht werden.

## Patentansprüche

1. Behälter mit einem kryokonservierten Oberhauttransplantat, **dadurch gekennzeichnet, daß** das Oberhauttransplantat ein biologisch verträgliches Trägermaterial und darauf angewachsene humane Zellen, wobei die menschlichen Zellen durch in vitro Kultivierung vermehrt wurden, umfaßt und der Behälter aus einem flexiblen, nicht zelltoxischen Kunststoffmaterial hergestellt ist und eine verschließbare Öffnung aufweist.

2. Behälter nach Anspruch 1, **dadurch gekennzeichnet, daß** das biologisch verträgliche Trägermaterial ausgewählt ist aus Materialien umfassend Silikon, Silikon-Nylon, Polyurethan, biologisch resorbierbare Materialien, Collagene, Hyaluronsäurederivate; Alginate und Calciumphosphatstrukturen.

3. Behälter nach Anspruch 1, **dadurch gekennzeichnet, daß** die humanen Zellen ausgewählt sind aus Keratinozyten, Fibroblasten, Melanozyten, Endothelzellen, Nervenzellen, Muskelzellen, Mesothelzellen.

4. Behälter nach Anspruch 1, **dadurch gekennzeichnet, daß** es sich um autologe Zellen handelt.

5. Behälter nach Anspruch 1, **dadurch gekennzeichnet, daß** es sich um allogene Zellen handelt.

6. Behälter nach einem der Ansprüche 4-5, **dadurch gekennzeichnet, daß** die Zellen mit wenigstens einem fremden Gen, insbesondere einem Gen kodierend für ein Zytokin, welches das Wachstum von anderen Zellen fördert, transfiziert wurden.

7. Behälter nach einem der vorhergehenden Ansprüche, **dadurch gekennzeichnet, daß** der Kunststoffbehälter (1)
- einen Beutel (2) aus flexiblem, nicht zelltoxischem Kunststoffmaterial, welcher aus zwei im wesentlichen gleichen Kunststoffbahnen (5,6) besteht, die unter Auslassung einer verschließbaren Öffnung (8) zum Einführen des kryokonservierten biologischen Materials längs ihrer Ränder (7) miteinander verbunden sind,
- ein Schlauchstück (3), das den Innenraum des Kunststoffbeutels (2) mit der Umgebung verbindet, und
- eine Absperrvorrichtung (4) umfaßt, die zwischen dem Kunststoffbeutel (2) und einem Anschluß (10) für ein Infusionssystem angeordnet ist.

8. Behälter nach Anspruch 7, **dadurch gekennzeichnet, daß** sich die Öffnung (8) zum Einführen des kryokonservierten biologischen Materials über die dem Schlauchstück (3) gegenüberliegende Seite des Kunststoffbeutels (2) erstreckt und lösbar verschließbar ist.

9. Behälter nach Anspruch 7 oder 8, **dadurch gekennzeichnet, daß** ein Aufreißmechanismus zum Aufreißen des Kunststoffbeutels (2) vorgesehen ist.

10. Behälter nach Anspruch 9, **dadurch gekennzeichnet, daß** der Aufreißmechanismus wenigstens eine aufreißbare Randverbindungsnaht (7.1) beinhaltet, die sich an ein seitliches Ende der Öffnung (8) anschließt.

11. Behälter nach Anspruch 9, **dadurch gekennzeichnet, daß** der Aufreißmechanismus einen die Beutelwand aufreißenden Aufreißfaden oder -band beinhaltet.

12. Behälter nach einem der vorhergehenden Ansprüche, **dadurch gekennzeichnet, daß** das Kunststoffmaterial lichtundurchlässig ist.

13. Behälter nach einem der Ansprüche 7 bis 12, **dadurch gekennzeichnet, daß** die den Beutel (2) bildenden Kunststoffbahnen (5,6) im wesentlichen rechteckig sind.

14. Behälter nach einem der Ansprüche 7 bis 13, **dadurch gekennzeichnet, daß** der Anschluß (10) für ein Infusionssystem als Luer-Lock-Verbindung ausgestaltet ist.

15. Behälter nach einem der Ansprüche 7 bis 14, **dadurch gekennzeichnet, daß** die Absperrvorrichtung (4) über einen Luer-Lock-Adapter (9) an das Schlauchstück (3) angeschlossen ist.

16. Behälter nach einem der Ansprüche 7 bis 15, **dadurch gekennzeichnet, daß** die Absperrvorrichtung (4) als Zweiwegehahn ausgebildet ist.

17. Behälter nach einem der vorhergehenden Ansprüche, **dadurch gekennzeichnet, daß** das sich in einem Medium-Kältekonservierungsmittel-Gemisch befindliche Oberhauttransplantat in dem Behälter luftdicht verschlossen ist, wobei sich in dem Behälter keine wesentlichen Luftmengen befinden.

18. Verfahren zum Auftauen eines kryokonservierten Oberhauttransplantats, **dadurch gekennzeichnet, daß**
a) in einen Behälter nach einem der Ansprüche 1 bis 17 angewärmtes Transplantatspezifisches Medium eingeführt wird, wodurch der Auftauvorgang mit einer kontinuierlichen Verdünnung des Kryokonservierungsmittels beginnt und
b) die Verpackung geöffnet wird.

19. Verfahren nach Anspruch 18, **dadurch gekennzeichnet, daß** das Medium mit einer vorbestimmten Flußrate zugeführt wird.

20. Verfahren nach Anspruch 18 oder 19, **dadurch gekennzeichnet, daß** das Oberhauttransplantat vor der Verwendung in einer geeigneten Waschlösung gespült wird.

## Claims

1. A container with a cryopreserved epidermal graft, **characterised in that** the epidermal graft comprises a biologically compatible support material and human cells grown thereon, the human cells having been multiplied by cultivation *in vitro,* and the container is produced from a flexible, non-cytotoxic plastic material and exhibits a sealable opening.

2. Container according to Claim 1, **characterised in that** the biologically compatible support material is selected from materials comprising silicone, silicone-nylon, polyurethane, biologically absorbable materials, collagens, derivatives of hyaluronic acid; alginates and calcium-phosphate structures.

3. Container according to Claim 1, **characterised in that** the human cells are selected from keratinocytes, fibroblasts, melanocytes, endothelial cells, nerve cells, muscle cells, mesothelial cells.

4. Container according to Claim 1, **characterised in that** it is a question of autologous cells.

5. Container according to Claim 1, **characterised in that** it is a question of allogenic cells.

6. Container according to one of Claims 4 to 5, **characterised in that** the cells were transfected with at least one foreign gene, in particular a gene coding for a cytokine that promotes the growth of other cells.

7. Container according to one of the preceding claims, **characterised in that** the plastic container (1) comprises
- a bag (2) made of flexible, non-cytotoxic plastic material which consists of two substantially alike plastic sheets (5, 6) which are connected to one another along their edges (7), leaving a sealable opening (8) for introducing the cryopreserved biological material,
- a hose coupling (3) which connects the interior space of the plastic bag (2) to the surroundings, and
- a shut-off device (4) which is arranged between the plastic bag (2) and a port (10) for an infusion system.

8. Container according to Claim 7, **characterised in that** the opening (8) for introducing the cryopreserved biological material extends over the side of the plastic bag (2) opposite the hose coupling (3) and is detachably sealable.

9. Container according to Claim 7 or 8, **characterised in that** a tear-open mechanism is provided for tearing the plastic bag (2) open.

10. Container according to Claim 9, **characterised in that** the tear-open mechanism includes at least one tear-open edge-connecting seam (7.1) which adjoins a lateral end of the opening (8).

11. Container according to Claim 9, **characterised in that** the tear-open mechanism includes a tear-open thread or tear-open strip which tears the wall of the bag open.

12. Container according to one of the preceding claims, **characterised in that** the plastic material is opaque.

13. Container according to one of Claims 7 to 12, **characterised in that** the plastic sheets (5, 6) forming the bag (2) are substantially rectangular.

14. Container according to one of Claims 7 to 13, **characterised in that** the port (10) for an infusion system is configured as a Luer-lock connection.

15. Container according to one of Claims 7 to 14, **characterised in that** the shut-off device (4) is attached to the hose coupling (3) via a Luer-lock adapter (9).

16. Container according to one of Claims 7 to 15, **characterised in that** the shut-off device (4) takes the form of a two-way stopcock.

17. Container according to one of the preceding claims, **characterised in that** the epidermal graft situated in a medium/cryopreservative mixture is hermetically sealed in the container, no substantial amounts of air being in the container.

18. A process for thawing a cryopreserved epidermal graft, **characterised in that**
a) warmed graft-specific medium is introduced into a container according to one of Claims 1 to 17, as a result of which the thawing process begins with a continuous dilution of the cryopreservative and
b) the packaging is opened.

19. Process according to Claim 18, **characterised in that** the medium is supplied at a predetermined flow-rate.

20. Process according to Claim 18 or 19, **characterised in that** the epidermal graft is rinsed in a suitable washing solution prior to use.

## Revendications

1. Récipient doté d'un transplant d'épiderme cryo-conservé, **caractérisé en ce que** le transplant d'épiderme comprend un matériau de support biologiquement compatible sur lequel on a fait croître des cellules humaines, les cellules humaines ayant été multipliées par culture in vitro, le récipient étant réalisé en une matière synthétique flexible non toxique pour les cellules et présentant une ouverture refermable.

2. Récipient selon la revendication 1, **caractérisé en ce que** le matériau de support biologiquement compatible est sélectionné parmi des matériaux qui comprennent le silicone, le silicone-nylon, le polyuréthane, des matériaux biologiquement résorbables, des collagènes, des dérivés d'acide hyaluronique, des alginates et des structures à phosphate de calcium.

3. Récipient selon la revendication 1, **caractérisé en ce que** les cellules humaines sont sélectionnées parmi les kératinocytes, les fibroblastes, les mélanocytes, les cellules endothéliales, les cellules nerveuses, les cellules musculaires et les cellules mésothéliales.

4. Récipient selon la revendication 1, **caractérisé en ce que** les cellules sont des cellules autologues.

5. Récipient selon la revendication 1, **caractérisé en ce que** les cellules sont des cellules allogènes.

6. Récipient selon l'une des revendications 4 et 5, **caractérisé en ce que** les cellules ont été transformées par fixation d'au moins un gène étranger, en particulier un gène qui code pour une cytokine qui favorise la croissance d'autres cellules.

7. Récipient selon l'une des revendications précédentes, **caractérisé en ce que** le récipient (1) en matière synthétique comprend:
- un sac (2) en une matière synthétique flexible non toxique pour les cellules qui est constitué de deux bandes (5, 6) de matière synthétique essentiellement identiques qui sont reliées l'une à l'autre en y ménageant une ouverture refermable (8) qui permet d'insérer le matériau biologique cryo-conservé par ses bords (7),
- un morceau (3) de tube flexible qui relie l'espace intérieur du sac (2) en matière synthétique et l'environnement et
- un dispositif de barrière (4) qui est disposé entre le sac (2) en matière synthétique et une tubulure de raccordement (10) d'un système de perfusion.

8. Récipient selon la revendication 7, **caractérisé en ce que** l'ouverture (8) d'insertion du matériau biologique cryo-conservée s'étend sur le côté du sac (2) en matière synthétique qui est opposé au morceau (3) de tuyau flexible et peut être refermée de manière libérable.

9. Récipient selon les revendications 7 ou 8, **caractérisé en ce qu'**un mécanisme de déchirure qui sert à déchirer le sac (2) en matière synthétique est prévu.

10. Récipient selon la revendication 9, **caractérisé en ce que** le mécanisme de déchirure contient au moins un cordon déchirable (7.1) de Iiaison des bords qui se raccorde à une extrémité latérale de l'ouverture (8).

11. Récipient selon la revendication 9, **caractérisé en ce que** le mécanisme de déchirure contient un fil ou un ruban de déchirure qui déchire la paroi du sac.

12. Récipient selon l'une des revendications précédentes, **caractérisé en ce que** la matière synthétique est opaque vis-à-vis de la lumière.

13. Récipient selon l'une des revendications 7 à 12, **caractérisé en ce que** les bandes (5, 6) de matière synthétique qui forment la sac (2) sont essentiellement rectangulaires.

14. Récipient selon l'une des revendications 7 à 13, **caractérisé en ce que** le raccordement (10) à un système de perfusion est configuré comme liaison à fermeture dite Luer.

15. Récipient selon l'une des revendications 7 à 14, **caractérisé en ce que** le dispositif de barrière (4) est raccordé au morceau (3) de tuyau flexible par l'intermédiaire d'un adaptateur (9) à fermeture dite Luer.

16. Récipient selon l'une des revendications 7 à 15, **caractérisé en ce que** le dispositif de barrière (4) est configuré comme robinet à deux voies.

17. Récipient selon l'une des revendications précédentes, **caractérisé en ce que** le transplant d'épiderme situé dans un mélange de milieu et d'agent de conservation à froid est enfermé dans le récipient de maniére étanche à l'air, le récipient ne contenant pas de quantités importantes d'air.

18. Procédé de décongélation d'un transplant d'épiderme cryo-conservé, **caractérisé en ce que**:
a) on place dans un récipient selon l'une des revendications 1 à 17 un milieu réchauffé, spécifique au transplant, l'opération de décongélation commençant par une dilution continue de l'agent de cryo-conservation et
b) l'emballage est ouvert.

19. Procédé selon la revendication 18, **caractérisé en ce que** le milieu est apporté à un débit prédéterminé.

20. Procédé selon les revendications 18 ou 19, **caractérisé en ce que** le transplant d'épiderme est rincé dans une solution de lavage appropriée avant son utilisation.
